# EUROPEAN PATENT APPLICATION

(11) **EP 2 207 070 A1**
(43) Date of publication of application: **14.07.2010**
(21) Application number: 10150259.9
(22) Date of filing: 07.01.2010
(51) Int. Cl.: G05B 19/05, G06F 9/48

(54) **Field control device and field control method**

(30) Priority: 09.01.2009 JP 2009003157
(71) Applicant: Yokogawa Electric Corporation, Tokyo 180-8750 (JP)
(72) Inventor: Yajima, Hideharu, Musashino-shi Tokyo 180-8750 (JP); Kitamura, Satoshi, Musashino-shi Tokyo 180-8750 (JP); Watanabe, Senji, Musashino-shi Tokyo 180-8750 (JP); Kisa, Masafumi, Musashino-shi Tokyo 180-8750 (JP); Sakamoto, Kazushi, Musashino-shi Tokyo 180-8750 (JP); Takizawa, Hiroyuki, Musashino-shi Tokyo 180-8750 (JP); Akabane, Kuniharu, Musashino-shi Tokyo 180-8750 (JP); Kobayashi, Yoshinori, Musashino-shi Tokyo 180-8750 (JP); Habaguchi, Kenji, Musashino-shi Tokyo 180-8750 (JP); Kozakai, Kiyotaka, Musashino-shi Tokyo 180-8750 (JP); Kurono, Mitsuhiro, Musashino-shi Tokyo 180-8750 (JP); Nakajima, Hiroaki, Musashino-shi Tokyo 180-8750 (JP)
(74) Representative: Grünecker, Kinkeldey, Stockmair & Schwanhäusser Anwaltssozietät

(57) **Abstract**

A field control device is provided. The field control device includes: a task executing unit configured to selectively and sequentially execute a control task relating to a field control and other tasks in a same control period; and a priority switching unit configured to switch a relative priority of the control task relative to the other tasks in the control period, wherein the priority is a priority of an execution sequence of tasks in the task executing unit. The priority switching unit is configured to: i) set the priority higher than a certain priority, before the control task is started; and ii) set the priority lower than the certain priority, after the control task is ended.

## Description

### BACKGROUND OF THE INVENTION

### Technical Field

The present disclosure relates to a field control device and a field control method. More particularly, the present disclosure relates to a filed control device and a field control method capable of selectively and sequentially executing control tasks relating to a field control and other tasks in the same control period.

### Related Art

In the field controller, a minimum unit of function of executing control operations is called a block, and plural types of blocks exist. When plural types of blocks are combined mutually and data input from the external device and data output to the external device are employed in combination, various control executive functions are implemented. The object is controlled by executing the control executive functions repeatedly within a given period (scan period). A length of the scan period is set in response to a rate of change of the controlled object, and the control that is made in a higher-speed scan period is required of the controlled object that changes more quickly. Therefore, the control tasks (tasks that execute the calculations necessary for the control) that have plural scan periods are present in response to the controlled object Also, functions of responding to the request (interrupt) made by the external device and functions other than the control executive functions are allocated to the field controller. These functions must be performed in real time (soft real time).

In order to execute the plural functions, the priorities that specify the execution sequence of respective functions are decided in the field controller in advance. Normally, the priorities of the tasks, which need the real time processing at a high level, and the external interrupts are set higher than those of the control tasks (*see* e.g., JP-A-2006-163730).

Owing to the influence of the external interrupt or the task whose priority is high, a delay occurs in starting the control task. Depending on whether or not the delay arises or a variation in the delay, a deviation is caused in starting the scan. In this case, the function with higher priority is designed to have a shorter processing time, so that fluctuation (jitter) in control is suppressed to such extent that it does not affect the controllability.

However, when the higher-speed scan (e.g., the scan within about 10 ms period) is required of the control task, in the related-art system, fluctuation (jitter) in control might cause a bad influence upon the control. In some cases, an omission of the process corresponding to one period of the scan periods (scan omission) might be caused. Accordingly, there is a problem in that the field control is not controlled in a stable state.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any of the problems described above.

Accordingly, it is an illustrative aspect of the present invention to provide a field control device and a field control method, capable of handling control tasks requiring a high-speed scan.

According to one or more aspects of the present invention, there is provided a field control device. The field control device includes: a task executing unit configured to selectively and sequentially execute a control task relating to a field control and other tasks in a same control period; and a priority switching unit configured to switch a relative priority of the control task relative to the other tasks in the control period, wherein the priority is a priority of an execution sequence of tasks in the task executing unit. The priority switching unit is configured to: i) set the priority higher than a certain priority, before the control task is started; and ii) set the priority lower than the certain priority, after the control task is ended.

According to the present invention, the relative priority of the control task relative to other tasks is set higher than the certain priority before the control task is started. Meanwhile, the relative priority of the control task is set lower than the certain priority after the control task is ended. Therefore, fluctuation (jitter) of control in the control task can be suppressed effectively.

Other aspects of the invention will be apparent from the following description, the drawings and the claims.

### BRIEF DESCRIPTION OF THE DRAWINGS

FIG. 1 is a block diagram showing a distributed control system including a field control device according to an exemplary embodiment of the present invention;
FIG.2 is a flowchart showing a priority switching operation of the field controller 2 shown in FIG. 1;
FIG.3 is a timing chart showing an operational example of the task executing unit 21 shown in FIG.1; and
FIG.4A and 4B are views showing priorities of respective tasks, wherein FIG.4A is a view showing a priority in a state that the priority of a "high-speed scan" is set to an initial value of the priority, and FIG.4B is a view showing a priority in a state that the priority of the "high-speed scan" is lowered than that shown in FIG.4A.

### BRIEF DESCRIPTION OF EXEMPLARY EMBODIMENTS

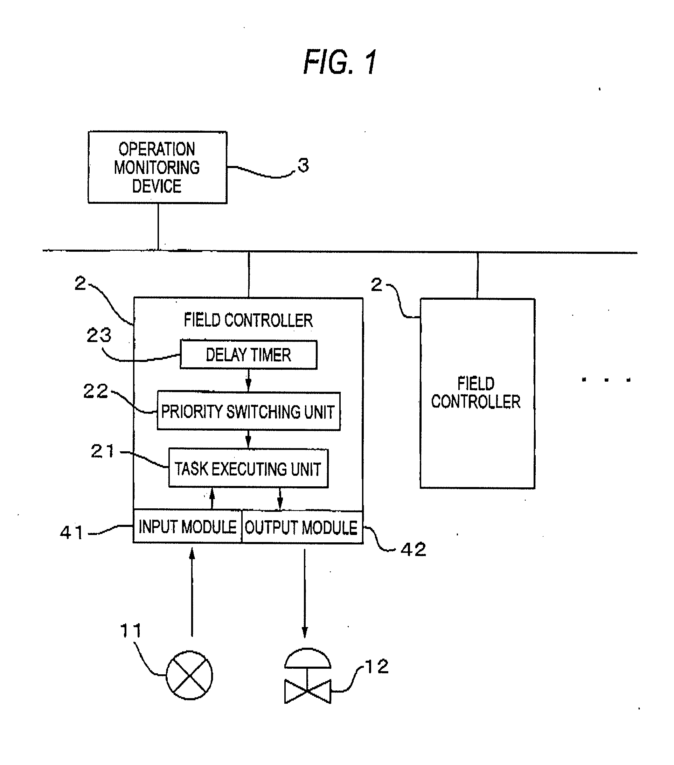

Exemplary embodiments of the present invention will be explained with reference to FIG.1 to FIG.4B hereinafter.

FIG. 1 is a block diagram showing a distributed control system including a field control device according to an exemplary embodiment of the present invention.

As shown in FIG.1, the distributed control system includes: field controllers 2, 2,... installed at dispersed locations in a plant; and an operation monitoring device 3 for operating/monitoring a group of field devices via the field controllers 2, 2,...

The field controller 2 includes: a task executing unit 21 that executes sequentially and selectively the control task relating to the field control and other tasks; a priority switching unit 22 that switches a relative priority of the control task with respect to other tasks within a control period in the execution sequence of the tasks in the task executing unit 21; and a delay timer 23 that gives an interrupt as a hardware to switch the priority.

A group of input/output modules for performing a communication with the field devices are installed into the field controller 2. FIG.1 illustrates only an input module 41 for receiving process data from a sensor 11, and an output module 42 for outputting operation data to a valve 12 in response to the data output from the sensor 11.

Next, an operation of the field controller 2 will be described hereunder.

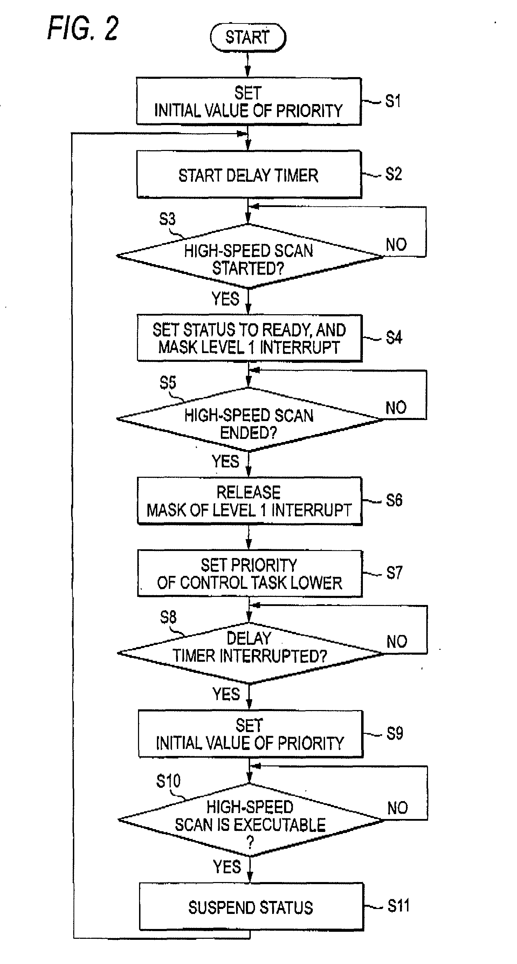

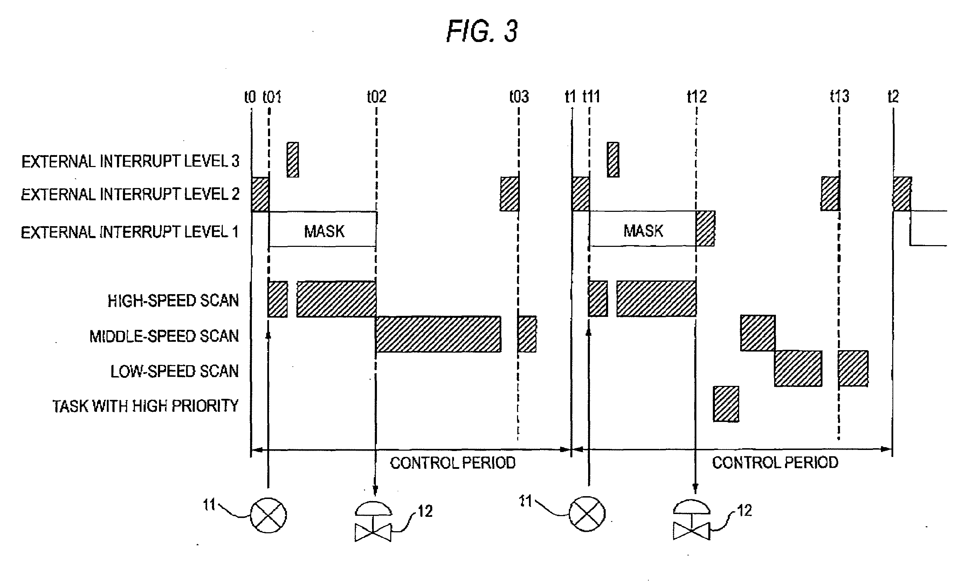

FIG.2 is a flowchart showing a priority switching operation of the field controller 2, and FIG.3 is a timing chart showing an operational example of the task executing unit 21.

The operation in FIG.2 is started upon the start of control in the task executing unit 21. In FIG.3, a period from time t0 to time t1 and a period from time t1 to time t2 show a control period, respectively.

In step S1 in FIG.2, the priority of a "high-speed scan" in the control task is set to an initial value of priority. This initial value of the priority is set to higher than a priority of an external interrupt that is at a "level 1".

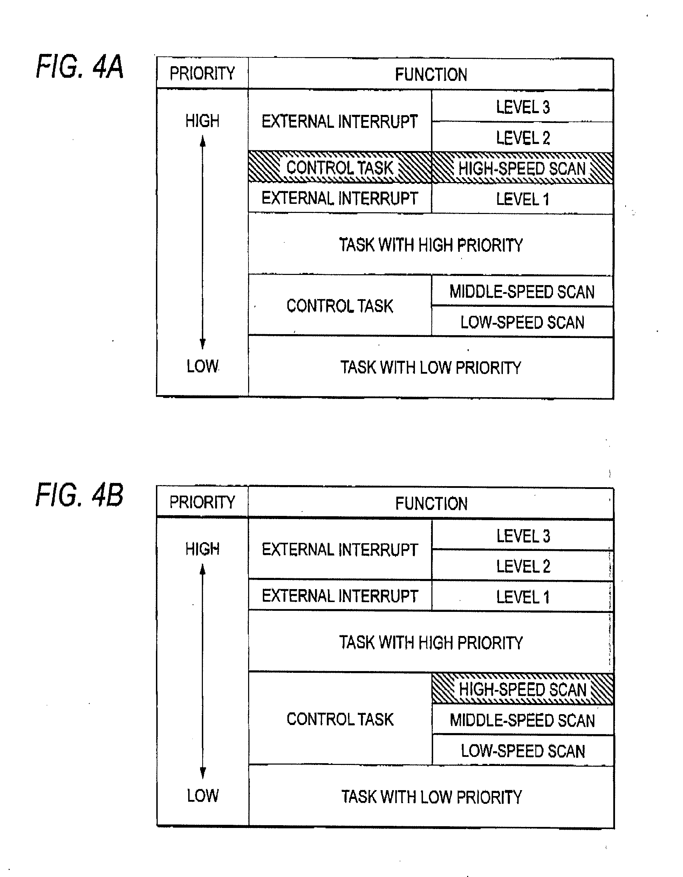

FIG.4A shows priorities of respective tasks in a state that the priority of the "high-speed scan" is set to an initial value of the priority. As shown in FIG.4A, in this state, the priority of the "high-speed scan" out of the control tasks is set to an upper level than a "task with high priority" and the external interrupt that is at the "level 1".

Then, in step S2, the delay timer 23 is set in response to an interrupt at a "level 2" indicating the start of control period (time t0 or time t1 in FIG.3). The delay timer 23 gives an interrupt after a given time elapsed from the start of the control period.

Then, in step S3, the process is halted until the "high-speed scan" in the control task is started. If the "high-speed scan" is started, the process goes to step S4. This "high-speed scan" is started when the external interrupt at the "level 2" is ended (e.g., time t0 or time t11 in FIG.3).

Then, in step S4, a status of the control task is set to ready, and the interrupt at the "level 1" is masked. As a result, the interrupts whose priority is low and which are produced in a great deal, e.g., IO (input/output) interrupt corresponding to the interrupt at the "level 1" are eliminated.

Then, in step S5, the process is halted until the "high-speed scan" in the control task is ended (time t02 or time t12 in FIG.3). If the "high-speed scan" is ended, the process goes to step S6, A period from time t01 to time t02 and a period from time t11 to time t12 correspond to calculation periods corresponding to one period of the "high-speed scan". For example, as shown in FIG.3, the valve 12 is controlled based on the process data supplied from the sensor 11 (FIG.1).

In step S6, a mask of the interrupt at the "level 1" is released.

At the same time, in step S7, the priority of the "high-speed scan" in the control task is lowered to priorities corresponding to a "low-speed scan" and a "middle-speed scan" in the control task. FIG.4B shows priorities of respective tasks in a state that the priority of the "high-speed scan" is lowered. As shown in FIC.4B, in this state, the priority of the "high-speed scan" in the control tasks is set to a lower level than the external interrupt that is at the "level 1" and the "task with high priority".

In step S8, the process is halted until the interrupt is issued by the delay timer 23 (time t03 or a time t13 in FIG.3). If the interrupt is issued, the process goes to step S9.

In step S9, the priority of the "high-speed scan" in the control tasks is set to an initial value of priority. This initial value of the priority is set to a value that is higher than the priority of the external interrupt at the "level 1". This process is similar to that in step S1. As shown in FIG.4A, in this state, the priority of the "high-speed scan" out of the control tasks is set to an upper level than the "task with high priority" and the external interrupt that is at the "level 1".

In step S10, the process is halted until the process goes to a state that the "high-speed scan" in the control tasks can be immediately started. If the process goes to a desired state, the process goes to step S11.

In step S11, a status of the control task is brought into a suspend status. Then, the process goes back to step S2.

Here, the operation shown in FIG.3 illustrates an example of the operation of a CPU on the control side when the control performed by the field controller 2 is duplicated. Here, the interrupt at a "level 3" is involved with a communication with a CPU on the standby side. In this case, the present invention is not limited to the case where the duplicated control is applied.

According to the field control device of the exemplary embodiment, fluctuation of the scan caused by the interrupt can be suppressed. Therefore, it is possible to apply the control using the high-speed scan (e.g., the scan in about 10 ms period), in which the scan omission is never caused. As a result, even when the high-speed and the high controllability are requested in the turbine and the like, the direct control performed by the field controller 2 can be applied.

## Claims

1. A field control device comprising:
a task executing unit configured to selectively and sequentially execute a control task relating to a field control and other tasks in a same control period; and
a priority switching unit configured to switch a relative priority of the control task relative to the other tasks in the control period, wherein the priority is a priority of an execution sequence of tasks in the task executing unit,
wherein the priority switching unit is configured to:
i) set the priority higher than a certain priority, before the control task is started; and
ii) set the priority lower than the certain priority, after the control task is ended.

2. The field control device according to claim **1**, wherein the priority switching unit is configured to set, in advance, the priority higher than the certain priority, before the control period is started.

3. The field control device according to claim **2**, wherein the priority switching unit is configured to set the priority higher than the certain priority, after a given time from a timing of a constant period timer that decides the control period.

4. The field control device according to claim **1**, wherein the priority switching unit is configured to set the priority higher than the certain priority, using a mask of an external interrupt.

5. A field control method of selectively and sequentially executing a control task relating to a field control and other tasks in a same control period, the field control device comprising:
(a) setting a relative priority of the control task relative to other tasks higher than a certain priority, before starting the control task, wherein the priority is a priority of an execution sequence of tasks; and
(b) setting the priority lower than the certain priority, after starting the control task.

6. The field control method according to claim 5,
wherein step (a) comprises: setting, in advance, the priority higher than the certain priority, before starting the control period.
